# EUROPEAN PATENT APPLICATION

(11) **EP 2 957 334 A1**
(43) Date of publication of application: **23.12.2015**
(21) Application number: 15172573.6
(22) Date of filing: 17.06.2015
(51) Int. Cl.: B01D 53/70, B01D 53/72, B01D 53/86, B01D 53/90

(54) **EXHAUST GAS TREATMENT APPARATUS**

(30) Priority: 20.06.2014 JP 2014127131; 13.03.2015 JP 2015050993
(71) Applicant: Ebara Corporation, Tokyo 144-8510 (JP)
(72) Inventor: SHINOHARA, Toyoji, Tokyo, 144-8510 (JP); KYOTANI, Takashi, Tokyo, 144-8510 (JP); KASHIWAGI, Seiji, Tokyo, 144-8510 (JP); HOSOTANI, Kazumasa, Tokyo, 144-8510 (JP)
(74) Representative: Wimmer, Hubert

(57) **Abstract**

An exhaust gas treatment apparatus which can reduce NOx (nitrogen oxide) produced as a by-product at the time of treating an exhaust gas by applying a three-way catalytic process is disclosed. The exhaust gas treatment apparatus has an oxidative decomposition unit configured to oxidatively decompose an exhaust gas and an exhaust gas cleaning unit configured to clean the exhaust gas after oxidative decomposition. The exhaust gas treatment apparatus includes a nitrogen oxide removing unit disposed at a stage subsequent to the oxidative decomposition unit and configured to remove a nitrogen oxide contained in the exhaust gas. The nitrogen oxide removing unit is configured to supply at least one of hydrocarbon and carbon monoxide into the exhaust gas discharged from the oxidative decomposition unit to cause the at least one of hydrocarbon and carbon monoxide to react with oxygen remaining in the exhaust gas, thereby removing oxygen from the exhaust gas, and thereafter to cause the nitrogen oxide in the exhaust gas to react with the at least one of hydrocarbon and carbon monoxide.

## Description

### BACKGROUND OF THE INVENTION

Field of the Invention:

The present invention relates to an exhaust gas treatment apparatus for detoxifying exhaust gases discharged from a manufacturing apparatus or the like for manufacturing semiconductor devices, liquid crystal panels, LEDs or the like.

### Description of the Related Art:

In a semiconductor manufacturing process for manufacturing semiconductor devices, liquid crystal panels, LEDs or the like, a process gas is introduced into a process chamber which is being evacuated to perform various processes such as an etching process, a CVD process or the like. Further, the process chamber and exhaust apparatuses connected to the process chamber are cleaned periodically by supplying a cleaning gas thereto. Because exhaust gases such as the process gas, the cleaning gas or the like contain a silane-based gas, a halogen gas, a PFC gas or the like, such exhaust gases have negative effects on the human body and on the global environment such as global warming. Therefore, it is not preferable that these exhaust gases are emitted to the atmosphere as they are.

Accordingly, these exhaust gases are made harmless by the exhaust gas treatment apparatus provided at a downstream side of the vacuum pump, and the harmless exhaust gases are emitted to the atmosphere. As an exhaust gas treatment apparatus, there have been widely used a combustion-type exhaust gas treatment apparatus configured to form flames in a furnace by supplying an oxygen source and a fuel and to combust the exhaust gases by the flames, and a heater-type, plasma-type, catalyst-type, or other-type exhaust gas treatment apparatus configured to oxidatively decompose the exhaust gases by supplying an oxygen source and electric power.

In these exhaust gas treatment apparatuses, when persistent substances such as PFC are treated at a high removal rate, treatment is performed by raising the temperature. Therefore, it is problematic that generation amount of NOx (nitrogen oxide) increases to make the amount of NOx (nitrogen oxide) discharged as a by-product large.

In order to reduce the discharge amount of NOx (nitrogen oxide), air-fuel ratio control and a three-way catalytic process have widely been used for automobiles such as gasoline engines. Specifically, the oxygen concentration in an exhaust gas is measured by an oxygen sensor or the like, and the amount of fuel injection or the like is controlled on the basis of the measured result, thereby controlling the air-fuel ratio to produce a state in which NOx (nitrogen oxide), CO (carbon monoxide), and hydrocarbon coexist in the exhaust gas. In this state, a three-way catalyst is used to cause NOx (nitrogen oxide) to react with CO (carbon monoxide) or hydrocarbon, thus removing NOx (nitrogen oxide). Although the three-way catalytic process is an excellent process capable of simultaneously removing NOx (nitrogen oxide), CO (carbon monoxide), and hydrocarbon, this three-way catalytic process does not function in the coexistence of oxygen. Therefore, in the above exhaust gas treatment apparatus which performs a detoxifying process by oxidatively decomposing the exhaust gas in an oxygen-rich (excess air) state, the three-way catalytic process cannot be employed because a large amount of oxygen remains in the exhaust gas after the detoxifying process (see Patent document 1).

### Citation List

### Patent Literature

(Patent document 1) Japanese Laid-open Patent Publication No. 63-119850

The present inventors have focused attention on the excellent features of the three-way catalytic process that is capable of simultaneously removing NOx (nitrogen oxide), CO (carbon monoxide), and hydrocarbon, and have made the present invention as a result of a great deal of studies for solving a technical subject matter to be able to use a three-way catalytic process even in an exhaust gas treatment apparatus in which a large amount of oxygen remains in the exhaust gas after the detoxifying process by oxidative decomposition.

### SUMMARY OF THE INVENTION

It is therefore an object of the present invention to provide an exhaust gas treatment apparatus which can reduce NOx (nitrogen oxide) produced as a by-product at the time of treating an exhaust gas by applying a three-way catalytic process, in the case where a large amount of oxygen remains in the exhaust gas after a detoxifying process by oxidative decomposition.

In order to achieve the above object, according to the present invention, there is provided an exhaust gas treatment apparatus having an oxidative decomposition unit configured to oxidatively decompose an exhaust gas and an exhaust gas cleaning unit configured to clean the exhaust gas after oxidative decomposition, comprising: a nitrogen oxide removing unit configured to remove nitrogen oxide contained in the exhaust gas, the nitrogen oxide removing unit being disposed at a stage subsequent to the oxidative decomposition unit; wherein the nitrogen oxide removing unit is configured to supply at least one of hydrocarbon and carbon monoxide into the exhaust gas discharged from the oxidative decomposition unit to cause the at least one of hydrocarbon and carbon monoxide to react with oxygen remaining in the exhaust gas, thereby removing oxygen from the exhaust gas, and thereafter to cause the nitrogen oxide in the exhaust gas to react with the at least one of hydrocarbon and carbon monoxide.

According to a preferred aspect of the present invention, a supply amount of the at least one of hydrocarbon and carbon monoxide is an amount corresponding to an air-fuel ratio of less than 1 where the at least one of hydrocarbon and carbon monoxide becomes incomplete combustion.

According to a preferred aspect of the present invention, the nitrogen oxide removing unit comprises a hydrocarbon and carbon monoxide supply section configured to supply at least one of hydrocarbon and carbon monoxide into the exhaust gas discharged from the oxidative decomposition unit, an exothermic reaction section configured to cause the at least one of hydrocarbon and carbon monoxide to react with oxygen remaining in the exhaust gas in the presence of a catalyst, and a denitration reaction section configured to cause the nitrogen oxide in the exhaust gas to react with the at least one of hydrocarbon and carbon monoxide in the exhaust gas in the presence of a catalyst.

According to a preferred aspect of the present invention, the nitrogen oxide removing unit is configured to cause the nitrogen oxide in the exhaust gas to react with the at least one of hydrocarbon and carbon monoxide in the exhaust gas, and thereafter to supply air or oxygen into the exhaust gas to cause oxygen in the supplied air or the supplied oxygen to react with the at least one of hydrocarbon and carbon monoxide remaining in the exhaust gas.

According to a preferred aspect of the present invention, the nitrogen oxide removing unit comprises a supply section configured to supply air or oxygen into the exhaust gas, the supply section being disposed at a stage subsequent to the exothermic reaction section and the denitration reaction section; and a CO oxidation reaction section configured to cause oxygen in the supplied air or the supplied oxygen to react with the at least one of hydrocarbon and carbon monoxide remaining in the exhaust gas in the presence of a catalyst.

According to a preferred aspect of the present invention, the catalysts used in the respective reaction sections comprise a carrier of silica (SiO₂) and/or alumina (Al₂O₃), and one or more of platinum (Pt), palladium (Pd), rhodium (Rh), copper oxide, and manganese oxide which are carried by the carrier.

According to a preferred aspect of the present invention, the nitrogen oxide removing unit is disposed in the exhaust gas cleaning unit or at a stage subsequent to the exhaust gas cleaning unit.

According to a preferred aspect of the present invention, the exhaust gas treatment apparatus further comprises a cooler configured to cool the exhaust gas, the cooler being disposed between the oxidative decomposition unit and the exhaust gas cleaning unit; wherein the nitrogen oxide removing unit is disposed in the cooler or at a stage subsequent to the cooler.

According to a preferred aspect of the present invention, the oxidative decomposition unit comprises one or more of a combustion system configured to oxidatively decompose the exhaust gas by heat of a combustion reaction between a fuel and oxygen, a plasma system configured to decompose the exhaust gas by plasma and to oxidatively decompose the exhaust gas by a reaction between the decomposed gas and oxygen, a heater system configured to heat the exhaust gas by a heater and to oxidatively decompose the exhaust gas by causing the exhaust gas to react with oxygen, and a catalyst system configured to oxidatively decompose the exhaust gas by bringing the exhaust gas and oxygen into contact with an oxidative catalyst.

According to the present invention, in the exhaust gas treatment apparatus in which a large amount of oxygen remains in the exhaust gas after a detoxifying process, NOx (nitrogen oxide) produced as a by-product at the time of treating the exhaust gas can be remarkably reduced by applying a three-way catalytic process, and thus environmental burdens can be reduced.

### BRIEF DESCRIPTION OF THE DRAWINGS

FIG. 1 is a schematic view showing an exhaust gas treatment apparatus according to a first embodiment of the present invention;
FIG. 2 is a schematic view showing an exhaust gas treatment apparatus according to a second embodiment of the present invention; and
FIG. 3 is a schematic view showing an exhaust gas treatment apparatus according to a third embodiment of the present invention.

### DESCRIPTION OF EMBODIMENTS

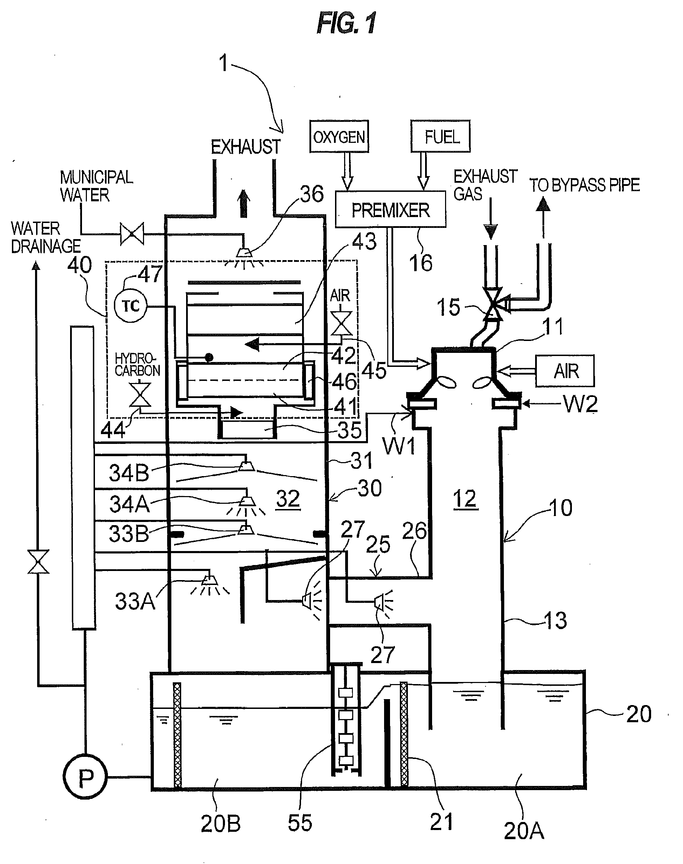

An exhaust gas treatment apparatus according to embodiments of the present invention will be described below with reference to FIGS. 1 through 3. In FIGS. 1 through 3, identical or corresponding parts are denoted by identical or corresponding reference numerals throughout views, and will not be described in duplication.

FIG. 1 is a schematic view showing a combustion-type exhaust gas treatment apparatus 1 according to a first embodiment of the present invention. As shown in FIG. 1, the combustion-type exhaust gas treatment apparatus 1 comprises a combustion unit 10 for oxidatively decomposing an exhaust gas through combustion, a cooling unit 25 for cooling the exhaust gas after combustion, and an exhaust gas cleaning unit 30 arranged at a stage subsequent to the cooling unit 25 and configured to clean the exhaust gas after cooling. The combustion unit 10 has a combustion chamber 12 for combusting the exhaust gas, and a burner 11 for forming flames swirling in the combustion chamber 12. The combustion chamber 12 extends downwardly by a combustion unit connecting pipe 13. The exhaust gas is supplied to the combustion unit 10 via a bypass valve (three-way valve) 15. If any problem is detected on the exhaust gas treatment apparatus, this bypass valve 15 is operated so that the exhaust gas is supplied to a bypass pipe (not shown) without being introduced into the exhaust gas treatment apparatus.

Fuel and oxygen are mixed in a premixer 16 in advance to form mixed fuel, and this mixed fuel is supplied to the burner 11. Further, air as an oxygen source for combusting (oxidizing) the exhaust gas is supplied to the burner 11. The burner 11 combusts the mixed fuel to form swirling flames in the combustion chamber 12, and the exhaust gas is combusted by the swirling flames. A UV sensor (not shown) is disposed inside the burner 11 and it is monitored by the UV sensor whether the swirling flames are formed normally. Air and nitrogen are supplied around the UV sensor as purge gas (not shown). Water W1 is supplied to the upper part of the combustion chamber 12. This water W1 flows down along the inner surface of the combustion chamber 12 and a water film is formed on the inner surface of the combustion chamber 12. The combustion chamber 12 is protected from heat of the swirling flames and corrosive gas by the water film. Further, a cooling water passage (not shown) through which cooling water W2 for cooling the burner 11 flows is provided between the burner 11 and the combustion chamber 12.

The exhaust gas introduced into the combustion chamber 12 through the burner 11 is combusted by the swirling flames. Thus, combustible gases and persistent substances such as silane, disilane , PFC and the like contained in the exhaust gas are combusted (oxidized). At this time, silica (SiO₂) is produced as powdery product. This silica exists in the exhaust gas as fine dust.

A part of such powdery product is accumulated on the burner 11 or the inner surface of the combustion chamber 12. Therefore, the combustion unit 10 is configured to operate a scraper (not shown) periodically so that the powdery product accumulated on the burner 11 or the inner surface of the combustion chamber 12 is scraped off. A circulating water tank 20 is disposed below the combustion chamber 12. A weir 21 is provided inside the circulating water tank 20, and the circulating water tank 20 is partitioned by the weir 21 into a first tank 20A at an upstream side and a second tank 20B at a downstream side. The powdery product scraped off by the scraper falls in the first tank 20A of the circulating water tank 20 through the combustion unit connecting pipe 13 and is accumulated on the bottom of the first tank 20A. Further, the water film which have flowed down along the inner surface of the combustion chamber 12 flows into the first tank 20A. Water in the first tank 20A flows over the weir 21 and flows into the second tank 20B.

The combustion chamber 12 communicates with the exhaust gas cleaning unit 30 through the cooling unit 25. This cooling unit 25 has a piping 26 extending toward the combustion unit connecting pipe 13, and spray nozzles 27, 27 arranged in the piping 26 and at the outlet of the piping 26. The spray nozzle 27 sprays water countercurrently into the exhaust gas flowing in the piping 26. Therefore, the exhaust gas treated by the combustion unit 10 is cooled by water sprayed from the spray nozzle 27. The ejected water is recovered to the circulating water tank 20 through the piping 26.

The exhaust gas cooled in the cooling unit 25 is then introduced into the exhaust gas cleaning unit 30. This exhaust gas cleaning unit 30 is an apparatus for cleaning the exhaust gas with water and removing water-soluble harmful components and fine dust contained in the exhaust gas. This dust is mainly composed of powdery product produced by combustion (oxidization) in the combustion unit 10.

The exhaust gas cleaning unit 30 comprises a wall member 31 for forming a gas passage 32, and a first mist nozzle 33A, a first water film nozzle 33B, a second mist nozzle 34A and a second water film nozzle 34B disposed in the gas passage 32. These mist nozzles 33A and 34A and water film nozzles 33B and 34B are located at the central portion of the gas passage 32. The first mist nozzle 33A and the first water film nozzle 33B constitute a first nozzle unit, and the second mist nozzle 34A and the second water film nozzle 34B constitute a second nozzle unit. Therefore, in this embodiment, two sets of nozzle units are provided. One set of nozzle units or three or more sets of nozzle units may be provided.

The first mist nozzle 33A is disposed further upstream in a flowing direction of an exhaust gas than the first water film nozzle 33B. Similarly, the second mist nozzle 34A is disposed further upstream than the second water film nozzle 34B. Specifically, the mist nozzle and the water film nozzle are alternately disposed. The mist nozzles 33A and 34A, the water film nozzles 33B and 34A, and the wall member 31 are composed of corrosion-resistant resin (e.g., PVC: polyvinyl chloride). In the illustrated example, four nozzles are shown. However, the number of nozzles may be properly changed, or the number of mist nozzles and the number of water film nozzles may be properly changed.

As shown in FIG. 1, the exhaust gas is introduced into the interior of the exhaust gas cleaning unit 30 from the piping 26 of the cooling unit 25 provided at a lower portion of the exhaust gas cleaning unit 30. The exhaust gas flows from the lower part to the upper part in the exhaust gas cleaning unit 30. More specifically, the exhaust gas introduced from the piping 26 moves upwards through the gas passage 32 at low speed. Mist, water fihn, mist and water film are formed in the gas passage 32 in this order.

Fine dust having a diameter of less than 1 µm contained in the exhaust gas easily adheres to water particles forming mist by diffusion action (Brownian movement), and thus the fine dust is trapped by the mist. Dust having a diameter of not less than 1 µm is mostly trapped by the water particles in the same manner. Since a diameter of the water particles is approximately 100 µm, the size (diameter) of the dust adhering to these water particles becomes large apparently. Therefore, the water particles containing dust easily hit the water film at the downstream side due to inertial impaction, and the dust is thus removed from the exhaust gas together with the water particles. Dust having a relatively large diameter which has not been trapped by the mist is also trapped by the water film in the same manner and is removed.

As shown in FIG. 1, the above-mentioned circulating water tank 20 is disposed below the exhaust gas cleaning unit 30. Water supplied from the mist nozzles 33A and 34A and the water film nozzles 33B and 34B is recovered into the second tank 20B of the circulating water tank 20. The water stored in the second tank 20B is supplied to the mist nozzles 33A and 34A and the water film nozzles 33B and 34B by a circulating water pump P. At the same time, the circulating water is supplied to an upper portion of the combustion chamber 12 of the combustion unit 10 as water W1, and as described above, the water film is formed on an inner surface of the combustion chamber 12. A liquid level sensor 55 is provided in the circulation tank 20. This liquid level sensor 55 monitors liquid level of the second tank 20B, and when the liquid level of the second tank 20B exceeds a predetermined value, a valve is opened to discharge water in the second tank 20B.

A mist trap 35 is provided above the water film nozzle 34B. This mist trap 35 has a plurality of baffle plates or filling materials therein and serves to trap the mist. In this manner, the exhaust gas from which the mist has been removed is supplied to the subsequent stage.

As shown in FIG. 1, a nitrogen oxide removing unit 40 (a portion surrounded by the dotted lines in FIG. 1) is disposed above the mist trap 35. The nitrogen oxide removing unit 40 includes an exothermic reaction section 41, a denitration reaction section 42, and a CO oxidation reaction section 43 which are successively arranged in this order from an upstream side to a downstream side in a flow direction of the exhaust gas. The respective reaction sections are filled with respective catalysts. A hydrocarbon and carbon monoxide supply section 44 for supplying at least one of hydrocarbon (CₙHₘ) and carbon monoxide is provided at a stage prior to (at an upstream side of) the exothermic reaction section 41, and an air supply section 45 for supplying air is provided at a stage prior to (at an upstream side of) the CO oxidation reaction section 43. A heater 46 for heating the exothermic reaction section 41 to a predetermined temperature range is provided. A temperature sensor 47 for measuring the temperature of the exothermic reaction section 41 that is heated by the heater 46 is provided.

In the nitrogen oxide removing unit 40 having the above structure, the case where hydrocarbon (CₙHₘ) is supplied from the hydrocarbon and carbon monoxide supply section 44 into the exhaust gas will be described below. If carbon monoxide is supplied from the hydrocarbon and carbon monoxide supply section 44, then the substance which reacts with oxygen is replaced from hydrocarbon to carbon monoxide, and no CO (carbon monoxide) is generated from a reaction between hydrocarbon and oxygen. Only this point is different from the following description.

The exhaust gas that contains hydrocarbon flows into the exothermic reaction section 41 in which the hydrocarbon reacts with oxygen that remains in a large amount in the exhaust gas in the presence of an oxidative catalyst, thus producing heat, CO (carbon monoxide), and CO₂. The exothermic reaction section 41 has been heated by the heater 46 to a temperature capable of initiating an exothermic reaction, before hydrocarbon starts to be supplied. Once the exothermic reaction is started, the heater 46 is turned off because the temperature of the reaction section is maintained by the generated heat. The amount of hydrocarbon supplied from the hydrocarbon and carbon monoxide supply section 44 is an amount corresponding to an air-fuel ratio of less than 1 so that hydrocarbon is larger in amount than oxygen and becomes incomplete combustion. Thus, after oxygen has been removed from the exhaust gas, the exhaust gas flows, together with hydrocarbon that has not yet been combusted and remains and CO (carbon monoxide) that has been generated in the exothermic reaction section 41, into the denitration reaction section 42. Therefore, NOx (nitrogen oxide), CO (carbon monoxide), and hydrocarbon coexist in the exhaust gas that flows into the denitration reaction section 42. In the denitration reaction section 42, NOx (nitrogen oxide) is allowed to react with hydrocarbon and CO (carbon monoxide), and thus NOx (nitrogen oxide) in the exhaust gas is removed (or the amount of NOx (nitrogen oxide) in the exhaust gas is reduced). After NOx (nitrogen oxide) has been removed (or the amount of NOx (nitrogen oxide) has been reduced) by the reaction in the denitration reaction section 42, the exhaust gas contains CO (carbon monoxide) and hydrocarbon which have become excessive due to the reaction with the NOx (nitrogen oxide). The exhaust gas is then supplied with air from the air supply section 45. The exhaust gas that has become to contain oxygen by air supply flows into the CO oxidation reaction section 43. In the CO oxidation reaction section 43, CO (carbon monoxide) and hydrocarbon that remain in the exhaust gas react with oxygen, thus turning into CO₂ and H₂O. The exhaust gas from which NOx (nitrogen oxide) has been removed (the amount of NOx (nitrogen oxide) has been reduced) is discharged from the nitrogen oxide removing unit 40. The exhaust gas discharged from the nitrogen oxide removing unit 40 is cooled, and is then emitted to the atmosphere through an exhaust duct.

The respective reactions that occur in the presence of the catalysts in the nitrogen oxide removing unit 40 will be described below.

If methane (CH₄) is added as a hydrocarbon source, the following reaction occurs at an air-fuel ratio of less than 1 where hydrocarbon is larger in amount than oxygen in the exothermic reaction section 41:

CH₄ + O₂ → CO₂+CO+H₂O

Heat is generated by the oxidative reaction of CH₄, thus heating the catalyst and consuming O₂ that obstructs a denitration reaction. Then, a reductive reaction by CH₄ whose reaction rate is slower than that of the oxidative reaction of CH₄ and a reductive reaction by CO (carbon monoxide) generated from the oxidative reaction of CH₄ occur in the denitration reaction section 42.

NOx + CH₄ → N₂ + CO₂ + H₂O

NOx + CO → N₂ + CO₂

Excessive CH₄ and CO (carbon monoxide) that have not been used in the reductive reactions in the preceding-stage denitration reaction section 42 can be detoxified by adding oxygen or air to cause the following reaction in the CO oxidation reaction section 43:

CH₄ + CO + O₂ → CO₂ + H₂O

Further, if CO (carbon monoxide) is supplied from the hydrocarbon and carbon monoxide supply section 44, the following reaction occurs at an air-fuel ratio of less than 1 where CO (carbon monoxide) is larger in amount than oxygen in the exothermic reaction section 41:

CO + O₂ → CO₂

Heat is generated by the oxidative reaction of CO (carbon monoxide), thus heating the catalyst and consuming O₂ that obstructs a denitration reaction. Then, a reductive reaction by CO (carbon monoxide) occurs in the denitration reaction section 42.

NOx + CO → N₂ + CO₂

Excessive CO (carbon monoxide) that has not been used in the reductive reactions in the preceding-stage denitration reaction section 42 can be detoxified by adding oxygen or air to cause the following reaction in the CO oxidation reaction section 43:

CO + O₂ → CO₂

The exothermic reaction section 41, the denitration reaction section 42, and the CO oxidation reaction section 43 may have a continuous structure or a discrete structure.

As catalysts used in the respective reaction sections, silica (SiO₂) and/or alumina (Al₂O₃) is used as a carrier, and one or more of platinum (Pt), palladium (Pd), rhodium (Rh), copper oxide, and manganese oxide that are carried by the carrier are used. As a promoter for preventing the catalysts from being deteriorated, ceria (CeO₂), lantana (La₂O₃), or zirconia (ZrO₂) may be contained. In the respective reaction sections, catalysts of the same type or different types may be used.

The temperatures of the respective reaction sections are in the range of 300°C to 600°C, more preferably in the range of 350°C to 500°C.

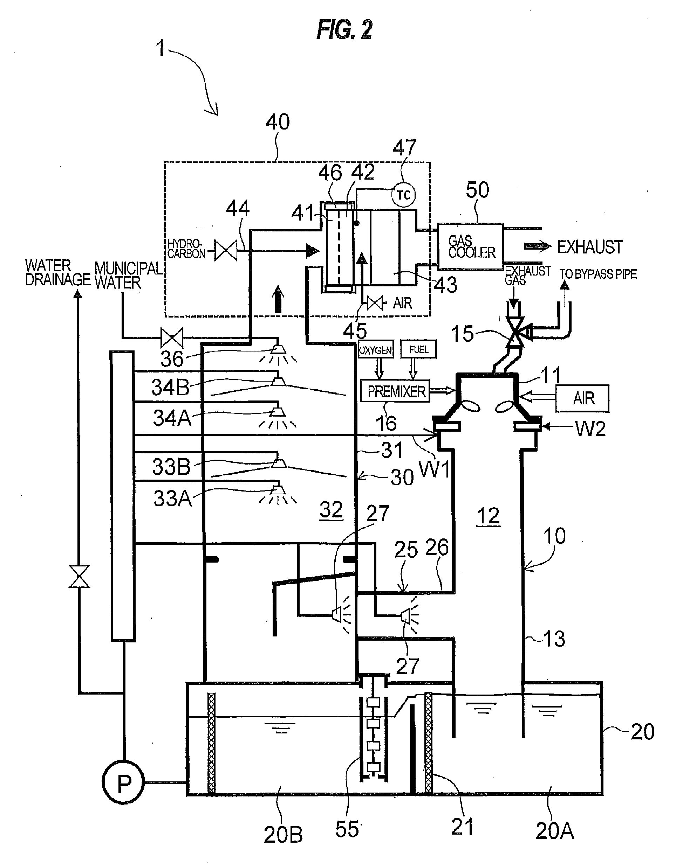

FIG. 2 is a schematic view showing a combustion-type exhaust gas treatment apparatus 1 according to a second embodiment of the present invention. According to the second embodiment, the nitrogen oxide removing unit 40 (a portion surrounded by the dotted lines in FIG. 2) is positioned at a stage subsequent to a shower nozzle 36. Specifically, the nitrogen oxide removing unit 40 is disposed at a stage subsequent to the exhaust gas cleaning unit 30. Therefore, the exhaust gas discharged from the nitrogen oxide removing unit 40 is in a high-temperature state because the exhaust gas has not passed through the cooling means. Therefore, according to the second embodiment, a gas cooler 50 for cooling the exhaust gas is disposed at a stage subsequent to (downstream of) the nitrogen oxide removing unit 40. The gas cooler 50 may heat the exhaust gas to be introduced into the combustion unit 10 by way of heat exchange. It is preferable to heat the exhaust gas to be introduced into the combustion unit 10 for an increased combustion efficiency. Reactions in the nitrogen oxide removing unit 40 shown in FIG. 2 are identical to those in the nitrogen oxide removing unit 40 shown in FIG. 1. Further, other structural details are identical to those of the combustion-type exhaust gas treatment apparatus 1 shown in FIG. 1.

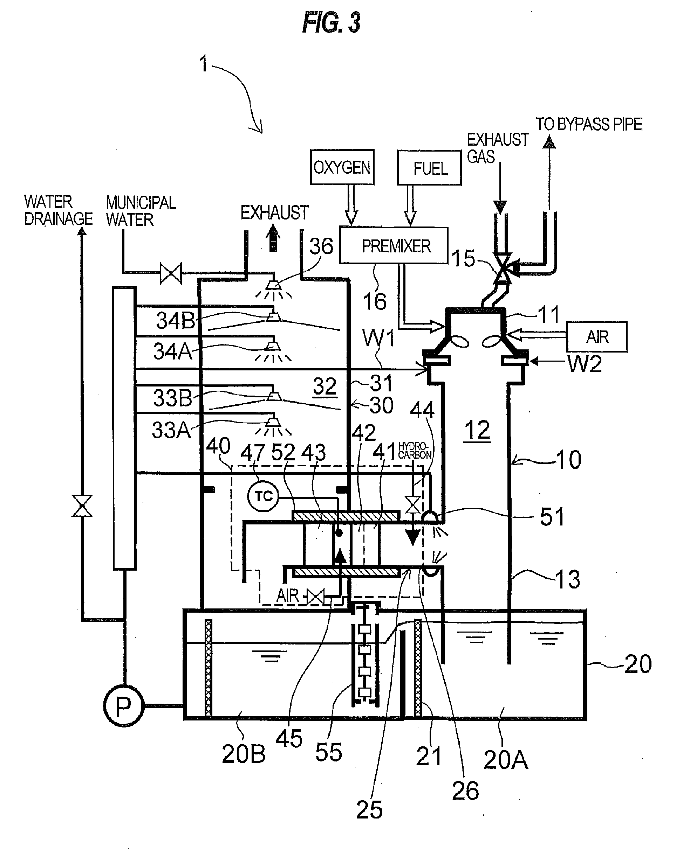

FIG. 3 is a schematic view showing a combustion-type exhaust gas treatment apparatus 1 according to a third embodiment of the present invention. According to the third embodiment, the nitrogen oxide removing unit 40 (a portion surrounded by the dotted lines in FIG. 3) is disposed at a position of the piping 26 of the cooler 25. Therefore, the spray nozzles 27 (see FIGS. 1 and 2) cannot be disposed in the piping 26 and at the outlet of the piping 26. Thus, according to the third embodiment, side spray nozzles 51 are disposed at the inlet of the piping 26 for spraying water to cool the exhaust gas discharged from the combustion unit 10. Because the temperature of the exhaust gas can be controlled by adjusting the amount of water sprayed from the side spray nozzles, the heater 46 (see FIGS. 1 and 2) may be eliminated. Further, a thermal insulation material 52 is provided so as to cover the outer circumferences of the exothermic reaction section 41, the denitration reaction section 42, and the CO oxidation reaction section 43. Reactions in the nitrogen oxide removing unit 40 shown in FIG. 3 are identical to those in the nitrogen oxide removing unit 40 shown in FIG. 1. Further, other structural details are identical to those of the combustion-type exhaust gas treatment apparatus 1 shown in FIG. 1. The nitrogen oxide removing unit 40 may be disposed immediately downstream of the piping 26.

The test results of the exhaust gas treatment conducted by using the combustion-type exhaust gas treatment apparatus 1 shown in FIG. 2 are indicated in the following Tables 1 to 4.

The tests were carried out under the conditions that the exhaust gas discharged from an etching apparatus was introduced into the combustion-type exhaust gas treatment apparatus 1 shown in FIG. 2 and was treated therein. In the nitrogen oxide removing unit 40, a city gas (main component: CH₄) was supplied from the nozzle of the hydrocarbon and carbon monoxide supply section 44. Pt-Rh-based and Pt-based catalysts were used, and the temperature of the catalysts were set to 500°C and the nitrogen oxide removing unit 40 was operated. The CO concentration was measured by a non-dispersive infrared absorption method, and the NOx concentration was measured by a chemiluminescent method.

In Runs 1 to 3, exhaust gases having respective different NOx concentrations were treated. Specifically, the NOx concentration in the exhaust gas at the inlet of the nitrogen oxide removing unit 40 was 500 ppm in the test of Run 1, 1500 ppm in the test of Run 2, and 3000 ppm in the test of Run 3. The CO concentrations in the exhaust gases at the inlet of the nitrogen oxide removing unit 40 were lower than 10 ppm in Run 1, Run 2, and Run 3.

**[Table 1]**

| | Run 1 | | |
|---|---|---|---|
| | Nitrogen oxide removing unit inlet | Denitration reaction unit outlet | CO oxidation reaction unit outlet |
| CO concentration | <10 | 4000-5000 | <10 |
| NOx concentration (ppm) | 500 | <10 | <10 |

**[Table 2]**

| | Run 2 | | |
|---|---|---|---|
| | Nitrogen oxide removing unit inlet | Denitration reaction unit outlet | CO oxidation reaction unit outlet |
| CO concentration (ppm) | <10 | 4000-5000 | <10 |
| NOx concentration (ppm) | 1500 | <10 | <10 |

**[Table 3]**

| | Run 3 | | |
|---|---|---|---|
| | Nitrogen oxide removing unit inlet | Denitration reaction unit outlet | CO oxidation reaction unit outlet |
| CO concentration (ppm) | <10 | 4000-5000 | <10 |
| NOx concentration (ppm) | 3000 | <10 | <10 |

As is clear from Tables 1 to 3, even though the NOx concentration was progressively higher from 500 ppm (Run 1) to 1500 ppm (Run 2) then to 3000 ppm (Run 3), NOx (nitrogen oxide) was reduced in the nitration reaction section 42, and the NOx concentration at the outlet of the denitration reaction section 42 was lower than 10 ppm in any of Run 1, Run 2, and Run 3.

On the other hand, the CO concentration at the inlet of the nitrogen oxide removing unit 40 was lower than 10 ppm in any of Run 1, Run 2, and Run 3. However, CO (carbon monoxide) generated by the oxidative reaction of CH₄ supplied from the hydrocarbon and carbon monoxide supply section 44 was supplied to the denitration reaction section, and thus the concentration of CO (carbon monoxide) that has not been used in the reductive reaction of NOx (nitrogen oxide), i.e., the CO concentration at the outlet of the denitration reaction section 42 was in the range of 4000 to 5000 ppm and thus became high. Thereafter, air (oxygen-containing gas) was added to the exhaust gas discharged from the denitration reaction section 42, and CH₄ and CO (carbon monoxide) remaining in the exhaust gas are oxidized in the CO oxidation reaction section 43, and thus the CO concentration at the outlet of the CO oxidation reaction section 43 was lower than 10 ppm.

The test results from Run 1 to Run 3 are put together in Table 4.

**[Table 4]**

| | Nitrogen oxide removing unit inlet | Denitration reaction unit outlet | CO oxidation reaction unit outlet |
|---|---|---|---|
| CO concentration (ppm) | <10 | 4000-5000 | <10 |
| NOx concentration (ppm) | 500-3000 | <10 | <10 |

As is clear from Table 4, when the exhaust gas treatment was carried out by using the exhaust gas treatment apparatus shown in FIG. 2, even though the NOx concentration in the exhaust gas at the inlet of the nitrogen oxide removing unit was in the range of 500 to 3000 ppm and was high, NOx (nitrogen oxide) was reduced in the denitration reaction section, and thus the NOx concentration at the outlet of the denitration reaction section could be lower than 10 ppm.

Further, even though the CO concentration at the outlet of the denitration reaction section was in the range of 4000 to 5000 ppm, the CO concentration at the outlet of the CO oxidation reaction section could be lower than 10 ppm.

Although the embodiments of the present invention have been described herein, the present invention is not intended to be limited to these embodiments. Therefore, it should be noted that the present invention may be applied to other various embodiments within a scope of the technical concept of the present invention.

## Claims

1. An exhaust gas treatment apparatus having an oxidative decomposition unit configured to oxidatively decompose an exhaust gas and an exhaust gas cleaning unit configured to clean the exhaust gas after oxidative decomposition, comprising:
a nitrogen oxide removing unit configured to remove nitrogen oxide contained in the exhaust gas, the nitrogen oxide removing unit being disposed at a stage subsequent to the oxidative decomposition unit;
wherein the nitrogen oxide removing unit is configured to supply at least one of hydrocarbon and carbon monoxide into the exhaust gas discharged from the oxidative decomposition unit to cause the at least one of hydrocarbon and carbon monoxide to react with oxygen remaining in the exhaust gas, thereby removing oxygen from the exhaust gas, and thereafter to cause the nitrogen oxide in the exhaust gas to react with the at least one of hydrocarbon and carbon monoxide.

2. The exhaust gas treatment apparatus according to claim 1, wherein a supply amount of the at least one of hydrocarbon and carbon monoxide is an amount corresponding to an air-fuel ratio of less than 1 where the at least one of hydrocarbon and carbon monoxide becomes incomplete combustion.

3. The exhaust gas treatment apparatus according to claim 1, wherein the nitrogen oxide removing unit comprises a hydrocarbon and carbon monoxide supply section configured to supply at least one of hydrocarbon and carbon monoxide into the exhaust gas discharged from the oxidative decomposition unit, an exothermic reaction section configured to cause the at least one of hydrocarbon and carbon monoxide to react with oxygen remaining in the exhaust gas in the presence of a catalyst, and a denitration reaction section configured to cause the nitrogen oxide in the exhaust gas to react with the at least one of hydrocarbon and carbon monoxide in the exhaust gas in the presence of a catalyst.

4. The exhaust gas treatment apparatus according to any one of claims 1 to 3, wherein the nitrogen oxide removing unit is configured to cause the nitrogen oxide in the exhaust gas to react with the at least one of hydrocarbon and carbon monoxide in the exhaust gas, and thereafter to supply air or oxygen into the exhaust gas to cause oxygen in the supplied air or the supplied oxygen to react with the at least one of hydrocarbon and carbon monoxide remaining in the exhaust gas.

5. The exhaust gas treatment apparatus according to claim 4, wherein the nitrogen oxide removing unit comprises a supply section configured to supply air or oxygen into the exhaust gas, the supply section being disposed at a stage subsequent to the exothermic reaction section and the denitration reaction section; and a CO oxidation reaction section configured to cause oxygen in the supplied air or the supplied oxygen to react with the at least one of hydrocarbon and carbon monoxide remaining in the exhaust gas in the presence of a catalyst.

6. The exhaust gas treatment apparatus according to any one of claims 3 to 5, wherein the catalysts used in the respective reaction sections comprise a carrier of silica (SiO₂) and/or alumina (Al₂O₃), and one or more of platinum (Pt), palladium (Pd), rhodium (Rh), copper oxide, and manganese oxide which are carried by the carrier.

7. The exhaust gas treatment apparatus according to any one of claims 1 to 6, wherein the nitrogen oxide removing unit is disposed in the exhaust gas cleaning unit or at a stage subsequent to the exhaust gas cleaning unit.

8. The exhaust gas treatment apparatus according to any one of claims 1 to 6, further comprising a cooler configured to cool the exhaust gas, the cooler being disposed between the oxidative decomposition unit and the exhaust gas cleaning unit;
wherein the nitrogen oxide removing unit is disposed in the cooler or at a stage subsequent to the cooler.

9. The exhaust gas treatment apparatus according to any one of claims 1 to 8, wherein the oxidative decomposition unit comprises one or more of a combustion system configured to oxidatively decompose the exhaust gas by heat of a combustion reaction between a fuel and oxygen, a plasma system configured to decompose the exhaust gas by plasma and to oxidatively decompose the exhaust gas by a reaction between the decomposed gas and oxygen, a heater system configured to heat the exhaust gas by a heater and to oxidatively decompose the exhaust gas by causing the exhaust gas to react with oxygen, and a catalyst system configured to oxidatively decompose the exhaust gas by bringing the exhaust gas and oxygen into contact with an oxidative catalyst.
